(19) Europäisches Patentamt

European Patent Office

Office européen des brevets

(11) **EP 0 643 827 B1**

(12) **EUROPÄISCHE PATENTSCHRIFT**

(45) Veröffentlichungstag und Bekanntmachung des Hinweises auf die Patenterteilung:
**30.07.1997   Patentblatt 1997/31**

(21) Anmeldenummer: **94911831.9**

(22) Anmeldetag: **30.03.1994**

(51) Int Cl.⁶: **G01N 27/12**

(86) Internationale Anmeldenummer:
**PCT/DE94/00360**

(87) Internationale Veröffentlichungsnummer:
**WO 94/23288 (13.10.1994 Gazette 1994/23)**

(54) **METHANSENSOR**

METHANE SENSOR

DETECTEUR DE METHANE

(84) Benannte Vertragsstaaten:
**AT DE ES GB IT NL SE**

(30) Priorität: **02.04.1993   DE 4310914**

(43) Veröffentlichungstag der Anmeldung:
**22.03.1995   Patentblatt 1995/12**

(73) Patentinhaber: **SIEMENS AKTIENGESELLSCHAFT**
**80333 München (DE)**

(72) Erfinder:
• **FLEISCHER, Maximilian**
  **D-85635 Höhenkirchen (DE)**
• **MEIXNER, Hans**
  **D-85540 Haar (DE)**

(56) Entgegenhaltungen:
**EP-A- 0 488 352**          **FR-A- 2 298 104**
**GB-A- 2 112 525**

**Beschreibung**

Für die kontinuierliche Überwachung der Konzentration von Methan in Luft werden vorwiegend Gassensoren auf der Basis halbleitender Metalloxide (siehe beispielsweise die GB-A-12 80 809) und die als Pellistoren bezeichneten Reaktionswarme- oder Wärmetönungssensoren eingesetzt (E. Jones in "Solid State Gas Sensors"; Eds. P.T. Moseley and B.C. Tofield, Adam Holger/ IOP Publ. Comp. 1987, pp. 17-31).

Halbleiter-Gassensoren besitzen üblicherweise einen keramischen Grundkörper, auf dessen Oberflache zwei Elektroden und das die Elektroden leitend verbindende Metalloxid angeordnet sind. Ein auf der Rückseite des Grundkörpers vorhandenes Widerstandselement erlaubt die Aufheizung des Sensors auf eine Temperatur im Bereich von etwa 100 bis 500°C. Strömt ein bestimmtes Gas über das thermisch aktivierte Sensormaterial, so ändert sich dessen Widerstand bzw. Leitwert aufgrund komplizierter Adsorptionsprozesse an der Oberflache. Die Konzentration des jeweiligen Gases laßt sich daher in einfacher Weise durch eine Widerstands- bzw. Leitwertmessung bestimmen.

Das am häufigsten verwendete Metalloxid ist das ab einer Temperatur von etwa 350°C halbleitende Zinnoxid. Es laßt sich durch eine geeignete Dotierung für verschiedene Gase sensibilisieren. Für den Nachweis von Methan wird beispielsweise Platin als Dotierstoff verwendet, wobei sich die größte Sensitivitat bei einer Sensortemperatur von 500°C einstellt.

Die dem Nachweis von Methan und anderen Kohlenwasserstoffen dienenden Pellistoren verwenden üblicherweise einen in einer keramischen Masse eingebetteten Platindraht als Meßelement und Mittel zur Aufheizung des Sensors auf eine im Bereich von etwa 300 bis 500°C liegende Betriebstemperatur. Die Oberfläche der Keramik ist hierbei mit einem Katalysator beschichtet. Enthält die Umgebungsluft ein oxidierbares Gas, verbrennt es katalytisch an der Sensoroberfläche. Infolge der dabei freiwerdenden Verbrennungswärme steigt die Sensortemperatur und damit auch der Widerstand des Platindrahtes entsprechend der Konzentration des oxidierbaren Gases in der Umgebungsluft an.

Die Wirkung des Katalysators auf der Sensoroberfläche kann im Laufe der Zeit abnehmen. Dieser Umstand begrenzt im wesentlichen die Lebensdauer der Pellistoren auf durchschnittlich ein bis zwei Jahre. Beeinträchtigt wird deren Funktionsfähigkeit auch durch die Anwesenheit von Katalysatorgiften in der Umgebungsluft. Zudem bereitet die Auswertung des Ausgangssignals eines Pellistors erhebliche Schwierigkeiten. So wächst das Sensorsignal zunächst mit der Methankonzentration an, um ab einem gewissen Grenzwert trotz höherer Gaskonzentration wieder kleiner zu werden. Man benötigt daher eine zusätzliche Auswerteelektronik, um eine eindeutige Interpretation des Meßsignals über den gesamten Konzentrationsbereich von 0 bis 100 Volumenprozent sicherzustellen. Da die in Halbleiter-Gassensoren verwendeten Metalloxidschichten ebenfalls chemischen Veränderungen unterliegen, müssen beide Detektortypen wiederholt nachgereicht werden.

Die EP-A-0 464 243 beschreibt einen Sauerstoffdetektor mit einer katalytisch nicht aktiven Sensorschicht aus Galliumoxid. Die Betriebstemperatur dieses Detektors liegt vorzugsweise im Bereich von 850 bis 1000°C, wo der Sauerstoff im Kristallgitter des Metalloxids im thermodynamischen Gleichgewicht steht mit dem Sauerstoff der Umgebungsatmosphäre. Da die Anzahl der Sauerstoffleerstellen im Kristallgitter und damit auch die Anzahl der frei beweglichen Elektronen vom jeweiligen Sauerstoffpartialdruck abhängt, hat jede Änderung der Sauerstoffkonzentration eine entsprechende Änderung der Leitfähigkeit des Galliumoxids zur Folge. Bei niedrigeren Temperaturen (T ≤ 700°C) ist das Sauerstoffleerstellengleichgewicht eingefroren, so daß der Detektor nicht mehr auf Änderungen des Sauerstoffpartialdrucks anspricht.

Wasserstoff und andere reduzierende Gase adsorbieren auf der Oberfläche des Galliumoxids. Erfolgt die Adsorption im Wege einer chemischen Bindung an die Galliumoxid-Oberfläche (Chemisorption), so geben die Adsorbatmoleküle Elektronen an das halbleitende Metalloxid ab, wodurch sich dessen Leitfähigkeit erhöht. Auf diesem Mechanismus beruht die Funktion des aus der EP-A-0 464 244 bekannten Galliumoxid-Sensors für reduzierende Gase. Im Temperaturbereich von etwa 400 bis 650°C reagiert der Sensor sowohl auf Wasserstoff als auch auf Kohlenmonoxid. Außerdem beobachtet man eine starke Querempfindlichkeit auf Wasserdampf, da auch Wassermoleküle geladen adsorbiert werden können.

Die Erfindung soll die Einsatzmöglichkeiten von Gassensoren erweitern, die ein sauerstoffempfindliches, halbleitendes Metalloxid als sensitives Material enthalten. Außerdem soll ein Verfahren zum Betrieb solcher Sensoren angegeben werden.

Zur Lösung dieser Aufgabe wird vorgeschlagen, den Sensor bei einer Temperatur im Bereich von 700 bis 850°C, insbesondere 775°C zu betreiben. Das halbleitende Metalloxid reagiert dann äußerst empfindlich auf Methan und weist keine wesentliche Querempfindlichkeit hinsichtlich anderer reduzierender Gase und Wasserdampf auf. Den Sensor kann man daher vorteilhafterweise zur kontinuierlichen Überwachung der Methankonzentration im Haushalt (Feststellen von Lecks in einer Erdgasleitung oder eines Defekts im Gasherd) oder in Bergwerken zur Schlagwetterwarnung beim Auftreten von Grubengas einsetzen.

Die Erfindung wird im folgenden anhand der Zeichnung erläutert. Hierbei zeigt:

Figur 1    den Aufbau eines bekannten Galliumoxid-Gassensors,

Figur 2    die Temperaturabhängigkeit der Sensitivität des Galliumoxid-Sensors auf Methan in Luft,

Figur 3 die Temperaturabhängigkeit der Sensitivität des Galliumoxid-Sensors auf reduzierende Gase,

Figur 4 die Kennlinie des Galliumoxid-Sensors in Abhängig keit von der Luftfeuchte,

Figur 5 den Einfluß von Störgasen auf die Sensorkennlinie.

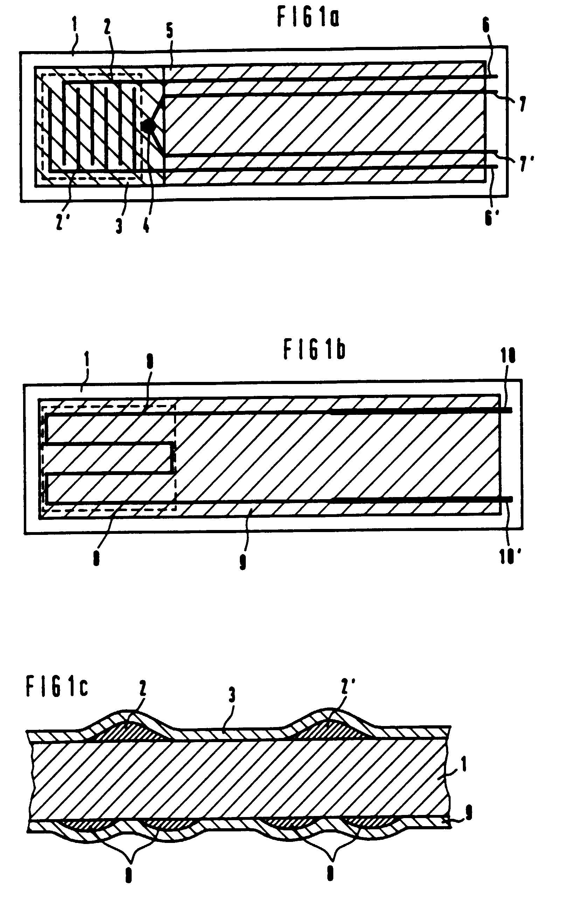

Wie die Figur 1 zeigt, besitzt der aus der EP-A-0 464 243 bzw. EP-A-0 464 244 bekannte Gassensor eine aus Beryllium-, Aluminium- oder Magnesiumoxid bestehende Trägerplatte 1, auf deren Oberfläche zwei eine Interdigitalstruktur bildende Platinelektroden 2, 2', eine diese Elektroden bedeckende und etwa 1 bis 2 µm dicke Galliumoxid-Schicht 3 sowie ein Thermoelement 4 angeordnet sind (siehe auch die den Detektor im Schnitt zeigende Figur lc). Die mit 5 bezeichnete Passivierungsschicht aus Glas, Metalloxid oder Siliziumoxid schirmt die den Elektroden 2, 2' und dem Thermoelement 4 jeweils zugeordneten Anschlußleitungen 6, 6' bzw. 7, 7' aus Platin vor dem Sauerstoff der Umgebungsatmosphare ab. Als Heizelement findet eine auf der Rückseite der Trägerplatte 1 angeordnete Widerstandsschleife 8 Verwendung (siehe Figur 1b). Sie besitzt eine spiralförmige oder mäanderförmige Struktur und ist ebenfalls mit einer Passivierungsschicht 9 versehen. Der Anschluß an die externe Heizstromversorgung erfolgt über niederohmige Leiterbahnen 10, 10'.

In dem gezeigten Ausführungsbeispiel sind die Platinelektroden 2, 2' unmittelbar auf der Oberfläche der Trägerplatte 1 angeordnet. Es ist selbstverständlich auch möglich, zwischen der Trägerplatte 1 und den Elektroden 2, 2' eine zusätzliche Isolationsschicht aus Siliziumoxid vorzusehen oder die Elektroden 2, 2' in die Galliumoxidschicht 3 vollständig einzubetten.

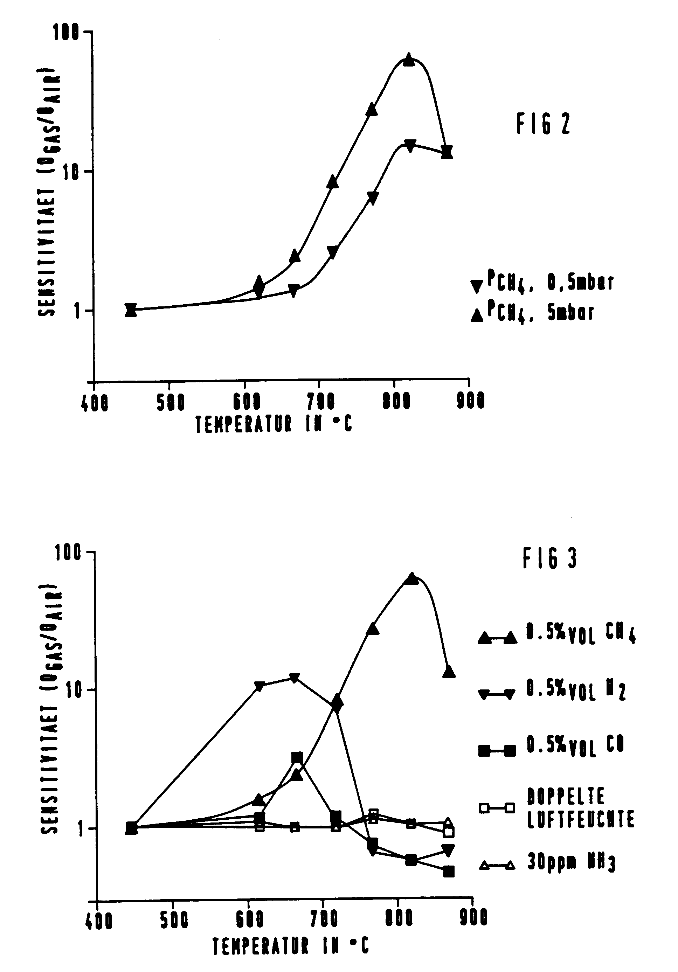

Der bekannte Sensor besitzt eine hohe Empfindlichkeit für Methan, wenn man das Galliumoxid mit Hilfe der Widerstandsschleife 8 auf eine Temperatur im Bereich zwischen 700 und 850°C aufheizt. Die Figur 2 zeigt die gemessene Temperaturabhängigkeit der durch den Quotienten

$$\sigma_{Gas}/\sigma_{Luft}$$

($\sigma_{Gas}$: Sensorleitfahigkeit an Meßgas; $\sigma_{Luft}$: Sensorleitfahigkeit an Luft) definierten Sensitivität für verschiedene Konzentrationen von Methan in feuchter Luft. Das Maximum der Sensitivität liegt bei etwa 800°C.

Wie aus Figur 3 hervorgeht, zeigt der Sensor bei Temperaturen oberhalb von etwa 750°C keine Querempfindlichkeit hinsichtlich der reduzierenden Gase Wasserstoff, Kohlenmonoxid und Ammoniak. Dies ist u. a. damit zu erklären, daß die Anzahl der chemisorbierten Moleküle aus energetischen Gründen mit steigender Temperatur abnimmt. Bei Temperaturen über 750 °C kommt die Chemisorption auf $Ga_2O_3$ offensichtlich

zum Erliegen, was eine auf diesem Prozeß basierende Änderung des Leitwertes verhindert. Im Unterschied zu Wasserstoff, Kohlenmonoxid oder Ammoniak kann Methan mit seiner stabilen Tetraeder-Konfiguration nicht auf der Oberfläche des halbleitenden Metalloxids chemisorbiert werden. Es reagiert bei ausreichend hohen Temperaturen allerdings mit dem Sauerstoff des Metalloxids (Oxidation des Methans), so daß an der Oberfläche Sauerstoffleerstellen entstehen. Diese geben frei bewegliche Elektronen an das Kristallgitter ab, wodurch sich die Leitfähigkeit des Metalloxids erhöht.

Im Temperaturbereich von 750 bis 800°C besitzt der Galliumoxid-Detektor eine Querempfindlichkeit auf den Sauerstoff der Umgebungsatmosphäre. Dies wirkt sich für den Nachweis von Methan in Luft jedoch nicht störend aus, da der Sauerstoffpartialdruck konstant bei 0,2 Bar liegt. Aber selbst wenn sich der Sauerstoffpartialdruck in geringem Maße ändern sollte, ist die daraus resultierende Sensorreaktion sehr klein im Vergleich zur Reaktion auf Methan. So hat beispielsweise eine 10% -ige Änderung des Sauerstoffpartialdrucks eine Leitwertänderung um den Faktor 1,8 zur Folge. Eine Änderung der Methankonzentration um 0,5 % bewirkt demgegenüber eine Leitwertsänderung um annähernd den Faktor 50.

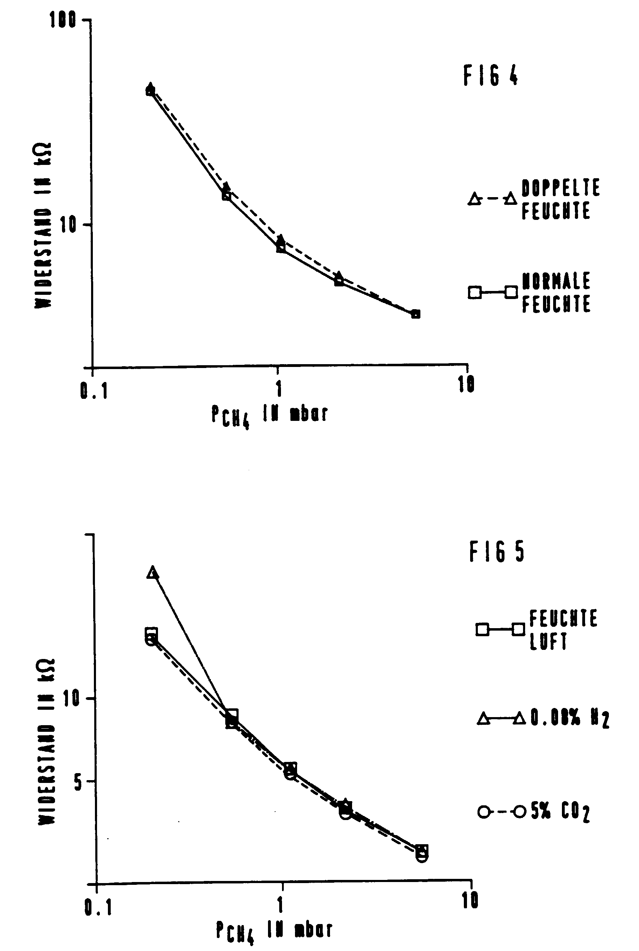

Die Figur 4 zeigt den Einfluß der Luftfeuchtigkeit auf die Sensorkennlinie. Aufgetragen ist der Widerstand des Sensors in Abhängigkeit vom Partialdruck des Methans bei einer Temperatur von T = 800 °C. Man erkennt deutlich, daß sich die Kennlinie des Methandetektors bei einer Verdopplung des Wasseranteils von 7,85 mbar Partialdruck (normale Feuchte) auf 15,7 mbar Partialdruck (doppelte Feuchte) kaum verändert (vgl. auch die in Figur 3 durch Quadrate gekennzeichneten Meßwerte).

Auch das Kohlendioxid, welches durchaus in höheren Konzentrationen in der Atmosphäre vorkommen kann, beeinflußt die Kennlinie des Methansensors nicht (siehe Figur 5). Lediglich bei sehr geringen Methankonzentrationen beobachtet man eine Querempfindlichkeit auf Wasserstoff.

Der beschriebene Methansensor genügt den strengen Anforderungen hinsichtlich der Eindeutigkeit des Meßsignals auch bei höheren Methankonzentrationen. Außerdem reagiert er nicht auf andere reduzierende Gase und die Luftfeuchte. Der Detektor ist deshalb insbesondere im Haushalt und im Bergbau zur kontinuierlichen Überwachung der Methankonzentration in Luft einsetzbar, wobei man mit einem einzigen Sensorelement auskommt und nicht mehrere verschiedene Meßmethoden anwenden muß. Da bei der Herstellung des Sensors die Verfahren der Dünnschichttechnologie zur Anwendung kommen, läßt er sich kostengünstig und gut reproduzierbar in größeren Stückzahlen fertigen.

Die Erfindung beschränkt sich selbstverständlich nicht auf das beschriebene Ausführungsbeispiel. So ist es ohne weiteres möglich, auch den aus der GB-A-1 529 461 bekannten Gassensor auf die angegebene Betriebstemperatur aufzuheizen und als Methandetektor zu verwenden.

Im Temperaturbereich von 700 - 850 °C lassen sich insbesondere auch solche Sensoren als Methandetektoren einsetzen, die an Stelle von $Ga_2O_3$ beispielsweise $TiO_2$, $Fe_2O_3$, $CeO_3$, $SrTiO_3$, $Nb_2O_3$ oder $HfO_2$ verwenden. Bei diesen Materialien handelt es sich jeweils um sauerstoffsensitive, halbleitende Metalloxide, die im genannten Temperaturbereich thermisch stabil sind.

**Patentansprüche**

1. Verwendung eines eine Temperatur im Bereich von 700 bis 850°C aufweisenden Sensors auf der Basis eines sauerstoffempfindlichen halbleitenden Metalloxids zum Nachweis von Methan.

2. Verfahren zum Betrieb eines Gassensors, der zwei durch ein sauerstoffempfindliches, halbleitendes Metalloxid leitend miteinander verbundene Elektroden und ein Heizelement aufweist,
   **dadurch gekennzeichnet,**
   daß zur Bestimmung von Methan das Metalloxid auf eine konstante Temperatur im Bereich von 700 bis 850°C aufgeheizt und dessen Widerstand, Leitfähigkeit oder relative Permeabilität gemessen wird.

3. Verfahren nach Anspruch 2,
   **dadurch gekennzeichnet,**
   daß das Metalloxid auf eine Temperatur von 775°C aufgeheizt wird.

**Claims**

1. Use of a sensor, which is based on an oxygen-sensitive semiconducting metal oxide and has a temperature in the range from 700 to 850°C, for detecting methane.

2. Method for operating a gas sensor which comprises two electrodes, conductively connected to one another via an oxygen-sensitive semiconducting metal oxide, and a heating element, characterized in that, for the purpose of the determination of methane, the metal oxide is heated to a constant temperature in the range of from 700 to 850°C and its resistance, conductivity or relative permeability is measured.

3. Method according to Claim 2, characterized in that the metal oxide is heated to a temperature of 775°C.

**Revendications**

1. Utilisation d'un détecteur présentant une température dans le domaine de 700 à 850°C à base d'un oxyde métallique semi-conducteur sensible à l'oxygène, pour la détection du méthane.

2. Procédé pour la mise en service d'un détecteur de gaz qui présente deux électrodes dont la connexion mutuelle conductrice est apportée par un oxyde métallique semi-conducteur sensible à l'oxygène, ainsi qu'un élément de chauffage, caractérisé en ce qu'on chauffe l'oxyde métallique pour la détermination du méthane à une température constante dans le domaine de 700 à 850°C et on mesure sa résistance, sa conductibilité ou sa perméabilité relative.

3. Procédé selon la revendication 2, caractérisé en ce qu'on chauffe l'oxyde métallique à une température de 775°C.

## FIG 1a

## FIG 1b

## FIG 1c

FIG 2

▼ P$_{CH_4}$, 0,5mbar
▲ P$_{CH_4}$, 5mbar

FIG 3

▲—▲ 0.5%VOL CH$_4$

▼—▼ 0.5%VOL H$_2$

■—■ 0.5%VOL CO

□—□ DOPPELTE LUFTFEUCHTE

△—△ 30ppm NH$_3$

FIG 4

WIDERSTAND IN kΩ

△—△ DOPPELTE FEUCHTE

□—□ NORMALE FEUCHTE

$P_{CH_4}$ IN mbar

FIG 5

WIDERSTAND IN kΩ

□—□ FEUCHTE LUFT

△—△ 0.00% $H_2$

○—○ 5% $CO_2$

$P_{CH_4}$ IN mbar